# EUROPEAN PATENT APPLICATION

(11) **EP 3 916 349 A1**
(43) Date of publication of application: **01.12.2021**
(21) Application number: 19912033.8
(22) Date of filing: 03.12.2019
(51) Int. Cl.: G01C 3/06

(54) **IMAGE PROCESSING DEVICE**

(30) Priority: 22.01.2019 JP 2019008531
(71) Applicant: Hitachi Astemo, Ltd., Hitachinaka-shi Ibaraki 312-8503 (JP)
(72) Inventor: YAMAZAKI, Kazuyoshi, Tokyo 100-8280 (JP); BETSUI, Keiichi, Tokyo 100-8280 (JP)
(74) Representative: MERH-IP Matias Erny Reichl Hoffmann Patentanwälte PartG mbB
(86) International application number: PCT/JP2019/047112
(87) International publication number: WO 2020/152995

(57) **Abstract**

Provided is an image processing apparatus capable of reducing the amount of memory and the amount of calculation required for processing. In an image processing apparatus 10, a storage means 12 stores an image. An affine processing means 20a performs first affine processing on an image P1 to acquire an image P3. An affine processing means 20b performs second affine processing on an image P2 to acquire an image P4. A coefficient change means 31 changes a coefficient of the affine processing for only one of the affine processing means 20a and the affine processing means 20b. A distance calculation means 25 detects a distance to an object in an image based on the image P3 and the image P4.

## Description

### Technical Field

The present invention relates to an image processing apparatus.

### Background Art

There is a stereo camera technology as a three-dimensional object recognition technology. This technology is a technology in which parallax is detected based on trigonometry using a difference in how images of two cameras arranged at different positions are reflected, and a depth and a position of an object are detected using the parallax. When this technology is used, a position of an observation target can be accurately detected. The stereo camera technology is applied to detect and recognize a three-dimensional object in in-vehicle applications, robot applications, and the like. The images of the two cameras of the stereo camera are transformed by predetermined projection (for example, a central projection system), and the distance is measured by detecting a difference between the images.

For example, when a camera detection image changes due to a change with time or a change in temperature, a distance measurement error occurs as a result. For example, in a plastic lens having an advantage in terms of cost reduction and asphericity, an image height changes with respect to a temperature. This causes a distance error.

In order to solve the problem of the occurrence of the distance measurement error due to the temperature change, PTL 1 below has an object of "performing highly accurate three-dimensional measurement even in a case where zoom and focus change in a three-dimensional measurement device using a stereo camera having a zoom and focus function" and describes a technique in which "the three-dimensional measurement device includes: a plurality of imaging means including one or more imaging means capable of changing zoom and focus; a control means for zooming and focusing; a stereo image processing means for performing stereo image processing on captured images output from the plurality of imaging means and measuring three-dimensional information; and a camera information storage means for storing camera information required to perform the stereo image processing. The camera information storage means has a plurality of pieces of camera information corresponding to states of camera information that changes depending on a zoom state and a focus state of each imaging means, and the stereo image processing means acquires the zoom state and the focus state of each imaging means and acquires the corresponding camera information from the camera information storage means for use in the stereo image processing".

Further, PTL 2 has an object of "performing distortion correction processing in response to a temperature change while reducing necessary storage capacity as compared with a conventional method for correcting distortion of an image using LUT", and describes a technique in which "a coefficient of a distortion correction formula including a polynomial expression capable of converting an image position before distortion correction processing in a captured image to an ideal position over a predetermined temperature range by changing the coefficient is stored in a correction coefficient storage unit as a correction coefficient for each of a plurality of specific temperatures different from each other. A distortion correction processing unit reads a correction coefficient, which minimizes an index value (deviation amount) indicating the degree of distortion of the captured image at a detected temperature, from the correction coefficient storage unit based on the temperature detected by a temperature sensor, and performs the distortion correction processing by the distortion correction formula using the read correction coefficient".

Further, PTLs 3 to 5 also describe a technique of changing a content of stereo image processing according to a temperature.

### Citation List

### Patent Literature

- PTL 1:: JP 2008-241491 A
- PTL 2:: JP 2012-147281 A
- PTL 3:: JP 2017-62173 A
- PTL 4:: JP 2009-117976 A
- PTL 5:: JP 2007-81806 A

### Summary of Invention

### Technical Problem

In conventional techniques, there is a problem that the amount of calculation and the required amount of memory are large in image conversion in the stereo image processing.

For example, in the three-dimensional measurement device described in PTL 1, two times of image processing according to the temperatures of the two cameras are performed with respect to an image deviation due to the temperature, and thus, the amount of calculation increases. Further, it is necessary to record distortion correction information according to the temperature in a nonvolatile memory for the both cameras, and the required amount of memory increases.

Further, in the three-dimensional measurement device of PTL 2, an attempt is made to reduce the amount of data using the polynomial expression with respect to an increase in the amount of nonvolatile memory, but this technique also requires calculation for both cameras, and the amount of calculation and the required memory increase.

Furthermore, image processing is performed for two cameras even in the techniques of PTLs 3 to 5, and thus, the amount of calculation and the required amount of memory increase.

The present invention has been made in view of the above problems, and an object thereof is to provide an image processing apparatus capable of reducing the amount of memory and the amount of calculation required for processing.

### Solution to Problem

An image processing apparatus according to the present invention includes: an image storage means for storing an image; a first affine processing means for performing first affine processing on a first image to acquire a third image; a second affine processing means for performing second affine processing on a second image to acquire a fourth image; a coefficient change means for changing a coefficient of affine processing for only one of the first affine processing means and the second affine processing means; and a distance calculation means for detecting a distance to an object in an image based on the third image and the fourth image.

According to a specific aspect, the image processing apparatus further includes a temperature difference acquisition means for acquiring a temperature difference between a first temperature related to a first camera that captures the first image and a second temperature related to a second camera that captures the second image, and the coefficient change means changes a coefficient of affine processing based on the temperature difference.

According to the specific aspect, the temperature difference acquisition means includes a first temperature acquisition means for acquiring the first temperature and a second temperature acquisition means for acquiring the second temperature. When a first difference between the first temperature and a predetermined reference temperature is larger than a second difference between the second temperature and the reference temperature, the coefficient change means changes a coefficient of affine processing for the first affine processing means. When the first difference is smaller than the second difference, the coefficient change means changes a coefficient of affine processing for the second affine processing means.

Further, an image processing apparatus according to the present invention includes: an image storage means for storing an image; a first conversion processing means for performing first conversion processing on a first image to acquire a third image; a second conversion processing means for performing second conversion processing on a second image to acquire a fourth image; a position change means for changing a position of a coefficient of conversion processing with a position where a displacement amount in an image before and after the conversion processing is minimized, for at least one of the first conversion processing means and the second conversion processing means; and a distance calculation means for detecting a distance to an object in an image based on the third image and the fourth image.

Further, an image processing apparatus according to the present invention includes: an image storage means for storing an image; a first conversion processing means for performing first conversion processing on a first image to acquire a third image; a second conversion processing means for performing second conversion processing on a second image to acquire a fourth image; a distance calculation means for detecting a distance to an object in an image based on the third image and the fourth image; an error detection means for detecting a detection error of the distance; and a coefficient feedback means for changing a coefficient of conversion processing for at least one of the first conversion processing means and the second conversion processing means based on the detection error of the distance.

The present specification encompasses the contents disclosed in Japanese Patent Application No. 2019-008531 from which the present application claims priority.

### Advantageous Effects of Invention

According to the image processing apparatus of the present invention, it is possible to reduce the amount of memory and the amount of calculation required for processing.

### Brief Description of Drawings

[FIG. 1] FIG. 1 is a block diagram illustrating an example of a configuration including an image processing apparatus according to a first embodiment of the present invention.
[FIG. 2] FIG. 2 is a block diagram illustrating an example of a configuration of the image processing apparatus of FIG. 1.
[FIG. 3] FIG. 3 is a view for describing an effect of changing a coefficient in the first embodiment.
[FIG. 4] FIG. 4 is a graph illustrating an example of a distance measurement error when a temperature difference between cameras changes.
[FIG. 5] FIG. 5 is a flowchart illustrating an example of processing in a modification of the first embodiment.
[FIG. 6] FIG. 6 is a block diagram illustrating an example of a configuration in another modification of the first embodiment.
[FIG. 7] FIG. 7 is a block diagram illustrating an example of a configuration of an image processing apparatus according to a second embodiment of the present invention.
[FIG. 8] FIG. 8 is a schematic view illustrating an outline of parallax image generation processing according to the second embodiment.
[FIG. 9] FIG. 9 is a block diagram illustrating an example of a configuration in a modification of the second embodiment.
[FIG. 10] FIG. 10 is a block diagram illustrating an example of a configuration of an image processing apparatus according to a third embodiment of the present invention.
[FIG. 11] FIG. 11 is a view illustrating correction of a relative positional deviation in an optical system.
[FIG. 12] FIG. 12 is a block diagram illustrating an example of a configuration in a modification of the third embodiment.
[FIG. 13] FIG. 13 is a block diagram illustrating an example of a configuration in another modification of the third embodiment.
[FIG. 14] FIG. 14 is a block diagram illustrating an example of a configuration of an image processing apparatus according to a fourth embodiment of the present invention.
[FIG. 15] FIG. 15 is a view illustrating an example of a method for detecting a distance measurement error by an error signal generation means in FIG. 14.
[FIG. 16] FIG. 16 is a block diagram illustrating an example of a configuration in which the first embodiment and the second embodiment are combined.

### Description of Embodiments

Hereinafter, embodiments of the invention will be described with reference to the accompanying drawings.

### [First Embodiment]

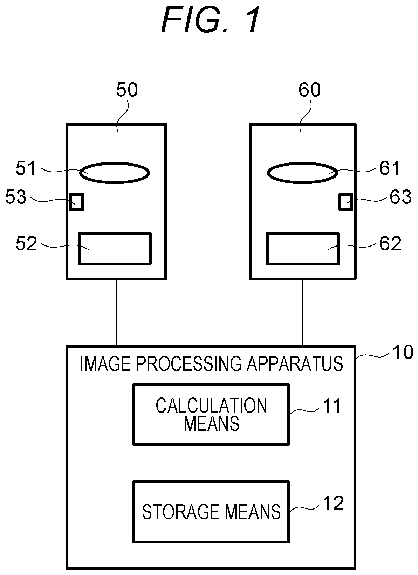

FIG. 1 is a block diagram illustrating an example of a configuration including an image processing apparatus 10 according to a first embodiment of the present invention. The image processing apparatus 10 is configured to enable input of a plurality of images, and is connected so as to be capable of receiving images from a camera 50 (first camera) and a camera 60 (second camera) constituting a stereo camera, respectively, in the example of FIG. 1.

The camera 50 includes a lens 51 (first lens) and an image sensor 52 (first image sensor). Further, the camera 60 includes a lens 61 (second lens) and an image sensor 62 (second image sensor). The camera 50 detects an image of an object or the like with the image sensor 52 via the lens 51. The camera 60 detects an image of an object or the like with the image sensor 62 via the lens 61.

The camera 50 includes a temperature sensor 53 (first temperature sensor). The temperature sensor 53 detects a temperature (first temperature) related to the camera 50. Similarly, the camera 60 includes a temperature sensor 63 (second temperature sensor). The temperature sensor 63 detects a temperature (second temperature) related to the camera 60. Here, the meaning of the "temperature related to the camera" can be appropriately defined by those skilled in the art, and may be, for example, a temperature of a lens, may be a temperature in the vicinity of the lens, may be a temperature of an image sensor (particularly a temperature of a CMOS element), may be temperatures of other components of the camera or a temperature of a space in the camera.

The image processing apparatus 10 has a configuration as a known computer, and includes a calculation means 11 and a storage means 12. The calculation means 11 includes, for example, a microprocessor and the like, and the storage means 12 includes, for example, at least one of a volatile memory and a nonvolatile memory. The storage means 12 can store an image and another information, and functions as, for example, an image storage means.

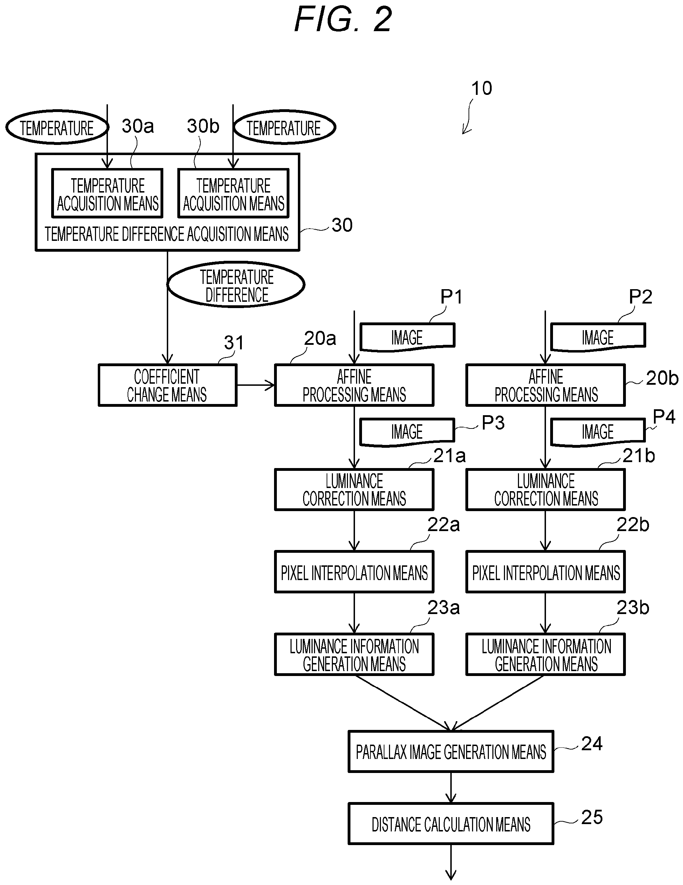

FIG. 2 is a block diagram illustrating an example of a configuration of the image processing apparatus 10. The image processing apparatus 10 includes each means illustrated in FIG. 2. In particular, the calculation means 11 may implement a function of each means and the storage means 12 may store information related to processing of each means.

The image processing apparatus 10 acquires an image P1 (first image) from the camera 50 and acquires an image P2 (second image) from the camera 60. An affine processing means 20a (first affine processing means) performs affine processing (first affine processing) on the image P1. The affine processing is, for example, a linear coordinate transformation process, but may include a non-linear operation. As a result of performing the affine processing, the affine processing means 20a acquires an image P3 (third image).

Similarly, an affine processing means 20b (second affine processing means) performs affine processing (second affine processing) on the image P2 to acquire an image P4 (fourth image). Note that the affine processing means 20a and the affine processing means 20b may also execute distortion conversion processing other than the affine processing. For example, in a case where a lens projection system is fsinθ, projective transformation to ftanθ may be performed. However, a format of an image after the projective transformation may be a system other than ftanθ.

A temperature difference acquisition means 30 includes a temperature acquisition means 30a (first temperature acquisition means) and a temperature acquisition means 30b (second temperature acquisition means). The temperature acquisition means 30a acquires a temperature related to the camera 50 from the temperature sensor 53, and the temperature acquisition means 30b acquires a temperature related to the camera 60 from the temperature sensor 63. The temperature difference acquisition means 30 acquires and outputs a temperature difference (temperature difference between cameras) between the temperature related to the camera 50 and the temperature related to the camera 60.

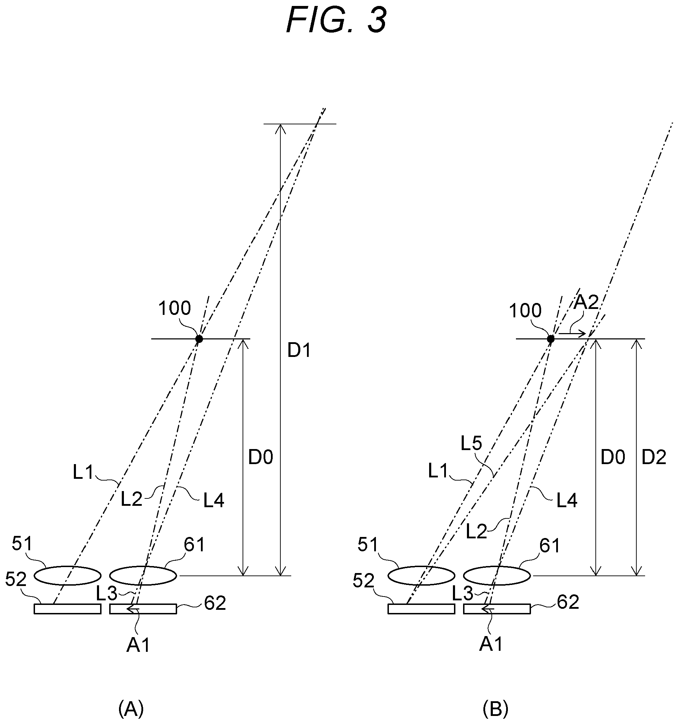

A coefficient change means 31 changes a coefficient of the affine processing for only one of the affine processing means 20a and the affine processing means 20b. In the example of FIG. 2, a coefficient of the affine processing means 20a is changed, but a coefficient of the affine processing means 20b is not changed. In the present embodiment, the coefficient change means 31 acquires the temperature difference between cameras from the temperature difference acquisition means 30, and changes the coefficient of the affine processing based on the temperature difference. A specific content of this change will be described later with reference to FIG. 3 and the like.

For example, the coefficient change means 31 generates a conversion table representing conversion with respect to the image P1 based on the temperature difference between cameras and a predetermined conversion reference table. The conversion reference table may be stored in advance in the storage means 12, for example. In this case, it can be said that the storage means 12 functions as a conversion reference coefficient storage means. This conversion table corresponds to, for example, conversion for image distortion correction, and can be configured as a table representing a function having a temperature difference as input and a ratio of an image height as output as a specific format. In this case, it can be said that the coefficient of the affine processing is substantially changed by changing a ratio of the image height according to the temperature difference.

Note that the coefficient change means 31 generates the conversion table as needed based on the temperature difference in the present embodiment, but, as a modification, a conversion table corresponding to each temperature difference may be held in advance in the storage means 12 or the like, and the coefficient change means 31 may select a specific conversion table based on a temperature difference.

A luminance correction means 21a (first luminance correction means) corrects the luminance of each pixel of the image P3. For example, correction is performed based on a gain of the camera 50, a difference in gain of each pixel in the image P3, and the like. Similarly, a luminance correction means 21b (second luminance correction means) corrects the luminance of each pixel of the image P4.

A pixel interpolation means 22a (first pixel interpolation means) performs demosaicing processing on the image P3. For example, conversion from a RAW image to a color image is performed. Similarly, a pixel interpolation means 22b (second pixel interpolation means) performs demosaicing processing on the image P4.

A luminance information generation means 23a (first luminance information generation means) generates luminance information of the image P3. For example, information representing a color image is converted into luminance information for generation of a parallax image. Similarly, a luminance information generation means 23b (second luminance information generation means) generates luminance information of the image P4.

A parallax image generation means 24 calculates parallax between two pieces of image information based on the image P3 and the image P4 (or information generated based on the image P3 and the image P4).

A distance calculation means 25 calculates a distance to an object appearing in an image based on the parallax. Here, it can be said that the distance calculation means 25 detects the distance to the object in the image based on the image P3 and the image P4 when considering the processing in the luminance correction means 21a, the luminance correction means 21b, the pixel interpolation means 22a, the pixel interpolation means 22b, the luminance information generation means 23a, the luminance information generation means 23b, the parallax image generation means 24, and the like described above. Note that those skilled in the art can arbitrarily design a distance measurement criterion, and the distance to the object can be measured from a predetermined distance reference point defined according to a positional relationship between the camera 50 and the camera 60, for example.

Here, a difference in operation principle between the related art and the first embodiment of the present invention will be described. In the related art (for example, those described in PTLs 1 to 5), a coefficient of affine processing is changed for each of two images output from two cameras in response to a temperature change (note that the present invention is not limited to a case where the coefficient of the affine processing is explicitly changed, and includes a case where a result substantially equivalent to that in which the coefficient of the affine processing is changed is obtained by performing additional conversion in addition to the affine processing). Therefore, it is necessary to change the coefficient of the affine processing for both the cameras in the related art.

On the other hand, in the first embodiment of the present invention, the image conversion is performed so as to correct only the difference between images generated due to the temperature difference between the two cameras. For example, in the first embodiment, only the coefficient of the affine processing for the image P1 is changed. As a result, it is possible to reduce the amount of memory (the amount of volatile memory or the amount of nonvolatile memory) and the amount of calculation required for changing the coefficient of the affine processing. In particular, when a high-pixel camera is used, the reduction amount of memory and the amount of calculation are increased, and thus, the effect is enhanced.

Next, a change of the coefficient of the affine processing by the coefficient change means 31 according to the first embodiment will be described more specifically.

FIG. 3 is a view for describing an effect of changing a coefficient in the first embodiment. FIG. 3(A) illustrates a state change in a case where there occurs a temperature difference between the camera 50 and the camera 60, and FIG. 3(B) illustrates a state after the coefficient change means 31 performs a coefficient change process according to the change in FIG. 3(A). Here, a distance to an object 100 is detected based on images acquired by the image sensor 52 and the image sensor 62 via the lens 51 and the lens 61.

In FIG. 3(A), a light beam L1 incident on the lens 51 from the object 100 and a light beam L2 incident on the lens 61 from the object 100 when measurement is performed in a state where there is no temperature difference (for example, a state where the camera 50 and the camera 60 are at a predetermined reference temperature) are indicated by one-dot chain lines. A distance D0 to the object 100 is detected based on a difference (parallax) between an incident position of the light beam L1 detected by the image sensor 52 and an incident position of the light beam L2 detected by the image sensor 62. In this case, there occurs no distance measurement error, and the distance D0 accurately represents the distance to the object 100.

In FIG. 3(A), it is assumed that a temperature difference occurs between cameras and the temperature of the lens 61 rises, for example. As a result, optical characteristics (a refractive index, a lens surface spacing, and the like) of the lens 61 change, and a state different from optical characteristics of the lens 51 is formed. As a result, it is assumed that a refraction angle of the light beam L2 in the lens 61 and the lens surface spacing change, and the light beam L2 is incident on the image sensor 62 as a light beam L3. In this case, an image height in the image sensor 62 changes, and a position of an image of the object 100 is detected to deviate on the image sensor 62 (arrow A1). When the same distance measurement processing is executed, it is erroneously detected that the light beam from the object 100 exists at an angle of view of a virtual light beam L4 indicated by a two-dot chain line. Therefore, an intersection between the light beam L1 and the virtual light beam L4 is erroneously detected as a position of the object 100, and the distance to the object 100 is detected as a distance D1. As can be seen from FIG. 3, the distance D0 and the distance D1 do not match, and a distance measurement error occurs. This is a mechanism of occurrence of the distance measurement error accompanying the temperature change of the lens.

Next, a coefficient change method of the first embodiment will be described with reference to FIG. 3(B). When the temperature difference occurs between cameras and the temperature of the lens 61 rises, for example, a conversion table is generated by the coefficient change means 31, and the affine processing means 20a performs image conversion only on the image P1 based on the conversion table. This image conversion does not actually change physical characteristics of the lens 51, but can be equivalently interpreted as changing conversion conditions of the angle of view and the image height of the lens 51. In the following description, it is assumed that the conversion conditions of the angle of view and the image height of the lens 51 have changed.

With the conversion of the angle of view and the image height of the lens 51, a light beam detected by the image sensor 52 changes from the light beam L1 to a virtual light beam L5 indicated by a two-dot chain line. An intersection between the virtual light beam L5 and the virtual light beam L4 is detected as a position of the object 100, and a distance D2 is detected. Here, a difference between the distance D2 and the distance D2 is smaller than a difference between the distance D1 and the distance D0, and the distance measurement error is improved. In particular, a coefficient can be changed such that the distance D0 and the distance D2 are almost the same distance, and a residual error does not cause a problem in practical distance measurement. Further, detection positions on the left and right of the object 100 (arrow A2) deviate due to the change of the coefficient, but a change in the angle of view can be suppressed to be small. For example, the change in the angle of view can be set to 0.1 deg or smaller, and there is no problem for applications such as in-vehicle applications and robot applications. Specific function, parameter, and the like for performing the above change of the coefficient can be appropriately designed by those skilled in the art.

As described above, according to the image processing apparatus of the first embodiment, it is possible to suppress the distance measurement error to the same extent as a conventional distance measurement error or to a degree that does not cause a problem in practical use, and limit the process of changing the coefficient of the affine processing to only the image of one camera, and thus, the required amount of memory and the amount of calculation can be reduced.

Next, an effect of the first embodiment will be quantitatively described.

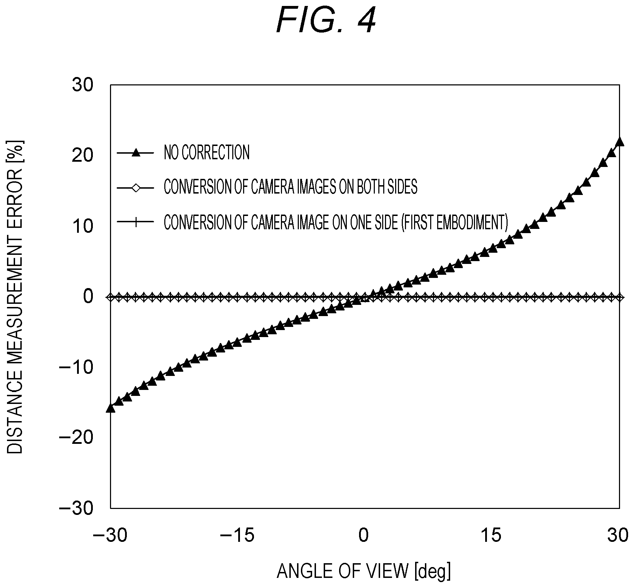

FIG. 4 is a graph illustrating an example of a distance measurement error when a temperature difference between cameras changes. The following condition examples were used for the calculation.
Distance to object: 50 m
Baseline length (distance between camera 50 and camera 60): 0.3 m
Lens projection system: orthogonal projection (fsinθ)
Lens focal length: 6 mm
Lens reference temperature: 30°C
Temperature of camera 50 (first temperature): 40°C
Temperature of camera 60 (second temperature): 70°C
Maximum angle of view (angle of object that can be captured by both camera 50 and camera 60): -30 deg to +30 deg
Temperature sensitivity of lens 51 and lens 61: 0.0048 µm/°C/deg (linear change)

Note that this temperature sensitivity corresponds to displacement of a position of an image by 10 µm when an angle of view is 30 deg and a temperature change is 70°C.

Here, it is assumed that the lens temperature sensitivity changes linearly with respect to an angle of view and a temperature. When considering manufacturing variations of a lens or the like, the temperature sensitivity actually varies depending on the lens, but the same effect can be obtained even if the temperature sensitivity varies (not that it is assumed that the temperature sensitivities of the lens 51 and the lens 61 are the same in this condition example). Further, the lens temperature sensitivity is not necessarily linear, and a similar effect can be obtained even if the lens temperature sensitivity is non-linear.

In this condition example, three types of distance measurement were performed to calculate a distance measurement error. Note that an error amount with respect to the actual distance is defined as the distance measurement error here. First distance measurement was performed without correction, that is, a distance was measured without changing a coefficient of affine processing. In this case, an image from the camera 50 is captured at 40°C, and conversion is performed using the coefficient of affine processing corresponding to the reference temperature of 30°C. Further, an image from the camera 60 is captured at 70°C, and conversion is performed using the coefficient of affine processing corresponding to the reference temperature of 30°C. A result is illustrated in FIG. 4 using the symbol "▲". Since the temperature difference between the camera 50 and the camera 60 is large, the distance measurement error increases as the angle of view increases.

Second distance measurement corresponds to the related art. In the second distance measurement, a coefficient of affine processing was changed for the images on both sides. In this case, an image from the camera 50 is captured at 40°C, and conversion is performed using the coefficient of affine processing corresponding to the temperature of 40°C. Further, an image from the camera 60 is captured at 70°C, and conversion is performed using the coefficient of affine processing corresponding to the temperature of 70°C. A result is illustrated in FIG. 4 using the symbol "◊" (overlapped with the symbol "+", which will be described later, on the graph). Since appropriate conversion is performed for the cameras on both sides, the distance measurement error is suppressed to almost 0% regardless of the angle of view.

Third distance measurement corresponds to the first embodiment of the present invention. In the third distance measurement, a coefficient of affine processing was changed only for the image from the camera 50. In this case, the image from the camera 50 is captured at 40°C, and specific affine processing is performed, but the coefficient of this affine processing is obtained by changing the coefficient corresponding to the reference temperature 30°C by an amount corresponding to the temperature difference 30°C between the cameras. Further, the image from the camera 60 is captured at 70°C, and conversion is performed using the coefficient of affine processing corresponding to the reference temperature of 30°C. A result is illustrated in FIG. 4 using the symbol "+". Note that this measurement result has a distance measurement error that is almost 0% in FIG. 4, and thus, overlaps with the result of the second distance measurement (the symbol "◊") on the graph. Although the amount of calculation and the required amount of memory for the coefficient change are reduced, the distance measurement error is suppressed to almost zero regardless of the angle of view. Note that, in principle, there is a case where the distance measurement error is larger than that in the second distance measurement (in which the coefficients of the affine processing are changed for the cameras on both sides), but such a difference is slight, and the difference is not a problem in practical use.

As described above, the required amount of memory (the amount of volatile memory or the amount of nonvolatile memory) and the amount of calculation, which are conventional problems, are reduced by changing the coefficient of the affine processing only for the image of the camera on one side according to the image processing apparatus 10 of the first embodiment.

In particular, a three-dimensional measurement device is required to have a high resolution and a wide field of view, the number of pixels of a camera has increased, and it is considered that the reduction effect will be further increased in the future.

Further, it is expensive to manufacture a lens using a material (glass or the like) having a small temperature change. However, according to the image processing apparatus 10 of the first embodiment, the error can be reduced even with a relatively inexpensive plastic lens or the like, and thus, the cost can be reduced.

In the first embodiment, a specific process of changing the coefficient by the coefficient change means 31 can be arbitrarily designed. For example, a situation of a change in an image with respect to a temperature change may be measured for the camera 50 and the camera 60 in advance, and a change amount of each coefficient may be determined based on a difference in the change obtained from the result. Further, as in PTL 2, a difference between changes of the camera 50 and the camera 60 may be calculated using a predetermined function, and a change amount of each coefficient may be determined. Even in this case, the amount of volatile memory can be reduced. For example, in the case of a change with a large time constant such as a temperature change, the time for preparing a conversion table can be increased. Therefore, the coefficient change means 31 may secure the conversion table for one image, read information on a conversion reference table for the camera 50 and the camera 60 from the storage means 12 or the like in units of blocks of several pixels, and store the reference table in a volatile memory of the storage means 12 in consideration of temperature information of lenses.

In the related art (for example, the techniques described in PTL 1 and PTL 2), it is necessary to measure distortion of an image a plurality of times under a predetermined temperature condition in order to perform image conversion. However, in the first embodiment of the present invention, the coefficient may be changed based on a design value related to a temperature or a measurement value of another lens and sensitivity information obtained from these values.

Although the coefficient change means 31 changes the coefficient of the affine processing for the affine processing means 20a (that is, for the image P1 from the camera 50) in the first embodiment, as a modification, the coefficient of the affine processing may be changed for the affine processing means 20b (that is, for the image P2 from the camera 60). In such a case, the coefficient of the affine processing for the image P1 is not changed.

As another modification, the coefficient change means 31 may be capable of switching any one of the affine processing means 20a and the affine processing means 20b for which the coefficient is changed.

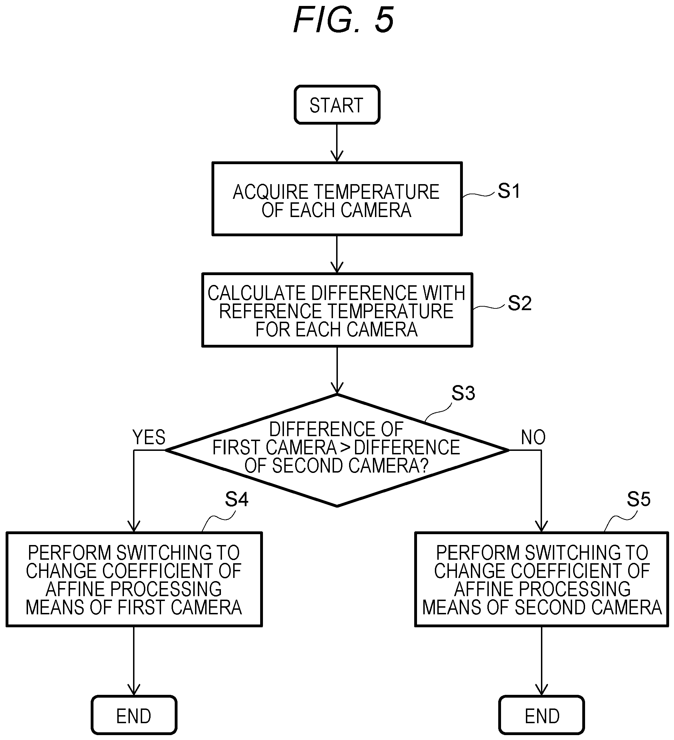

FIG. 5 is a flowchart illustrating an example of processing of the temperature difference acquisition means 30 and the coefficient change means 31 in such a modification. In the processing of FIG. 5, first, the temperature difference acquisition means 30 acquires a temperature related to the camera 50 and a temperature related to the camera 60 (step S1).

Next, the temperature difference acquisition means 30 or the coefficient change means 31 calculates a difference (first difference) between the temperature related to the camera 50 and a predetermined reference temperature, and calculates a difference (second difference) between the temperature related to the camera 60 and the reference temperature (step S2). This reference temperature is, for example, a reference temperature on the specification of the lens, and is set in advance and stored in the storage means 12. The difference is expressed, for example, as an absolute value of the difference.

Next, the coefficient change means 31 compares the difference related to the camera 50 with the difference related to the camera 60 (step S3). When the difference related to the camera 50 is larger, the coefficient change means 31 switches to change the coefficient of the affine processing for the affine processing means 20a (step S4). In other words, when the difference between the temperature related to the camera 50 and the reference temperature is larger than the difference between the temperature related to the camera 60 and the reference temperature, the coefficient change means 31 switches to change the coefficient of the affine processing for the image P1 from the camera 50.

On the other hand, when the difference related to the camera 60 is larger, the coefficient change means 31 switches to change the coefficient of the affine processing for the affine processing means 20b (step S5). In other words, when the difference between the temperature related to the camera 60 and the reference temperature is larger than the difference between the temperature related to the camera 50 and the reference temperature, the coefficient change means 31 switches to change the coefficient of the affine processing for the image P2 from the camera 60.

Note that those skilled in the art can appropriately design a branch destination or processing when the difference related to the camera 50 is equal to the difference related to the camera 60.

Here, in general, when temperatures of two lenses are different, an error is smaller in an image obtained by a lens whose temperature is closer to a reference temperature. Therefore, when the coefficient of the affine processing is changed only for the image of the camera on one side as in the present invention, more accurate distance measurement can be realized by setting a lens having a temperature closer to a lens reference temperature as a reference, and changing a coefficient for a lens having a temperature farther from the lens reference temperature to match the lens having the temperature closer to the lens reference temperature.

Although the coefficient change means 31 operates based on the temperature difference between cameras in the first embodiment, a criterion for the operation is not limited to the temperature difference. For example, as a modification, the operation may be performed based on a relative positional relationship between cameras. As a more specific example of such a modification, an in-vehicle image processing apparatus can be configured to reduce the influence of a windshield on an image.

When the image processing apparatus 10 is used for in-vehicle applications, there is a case where a windshield is not used for inspection at the time of shipment. In such a case, there is a possibility that an image is distorted due to the influence of a curvature of the windshield in a state of being attached to a vehicle, and a distance measurement error according to an angle of view occurs. Even for such influence, it is possible to reduce a distance measurement error by changing a coefficient of only one camera image.

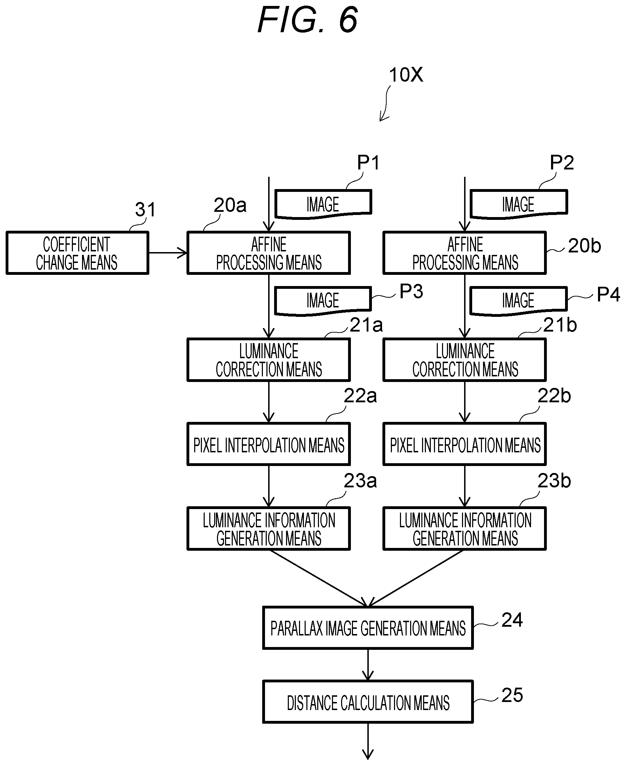

FIG. 6 is a block diagram illustrating an example of a configuration of an image processing apparatus 10X according to such a modification. In this case, the temperature difference acquisition means 30, the temperature sensor 53, and the temperature sensor 63 are unnecessary, and the coefficient change means 31 operates to change a coefficient of affine processing for the affine processing means 20a or the affine processing means 20b based on a positional relationship between a position related to the camera 50 and a position related to the camera 60. Note that, when a positional relationship between cameras is fixed, information related to the positional relationship may be stored in the storage means 12 in advance. Further, when a positional relationship between cameras can change, a means for acquiring the positional relationship between the cameras may be provided.

In the case of in-vehicle applications, it is desirable to hold distortion information at the time of shipment for the purpose of analysis or the like, and a nonvolatile memory is required due to image conversion of camera images on both sides. On the other hand, the amount of nonvolatile memory can be halved in the coefficient change of only the one camera image as in the present modification. In this case, the coefficient change means 31 may directly transfer a conversion table from the storage means 12 to the affine processing means 20a or the affine processing means 20b. The conversion table in this case can be created based on a result of a chart or the like.

### [Second Embodiment]

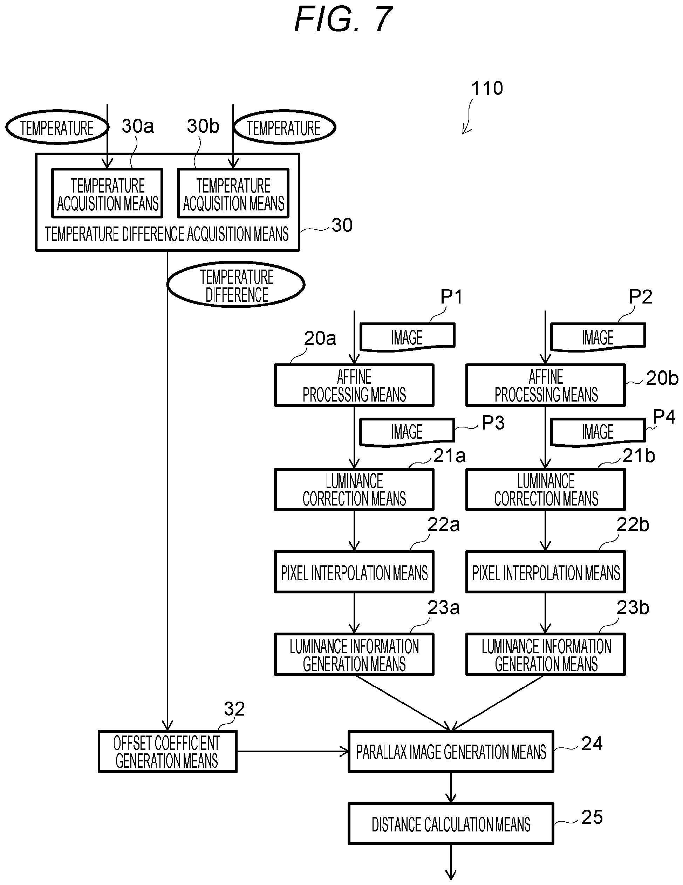

FIG. 7 is a block diagram illustrating an example of a configuration of an image processing apparatus 110 according to a second embodiment of the present invention. In the first embodiment, the coefficient change means 31 explicitly changes the affine coefficient for the affine processing means 20a. In the second embodiment, the parallax image generation means 24 performs offset processing, thereby performing processing equivalent to indirectly changing the affine coefficient.

Instead of the coefficient change means 31 of the first embodiment, an offset coefficient generation means 32 is provided in the second embodiment. The offset coefficient generation means 32 acquires a temperature difference between cameras from the temperature difference acquisition means 30, and generates offset information based on the temperature difference.

For example, the offset coefficient generation means 32 generates an offset table for generating a parallax image from the images P3 and P4 based on the temperature difference between cameras and a predetermined offset reference coefficient. The offset reference coefficient may be stored in advance, for example, in the storage means 12. In this case, it can be said that the storage means 12 functions as an offset reference coefficient storage means. This offset table corresponds to, for example, conversion for correcting parallax, and can be expressed, as a specific format, as a table representing a function having a temperature difference and pixel coordinates as inputs and an offset value of the pixel coordinates as an output.

In this case, it can be said that the coefficient of the affine processing is substantially changed only for an image on one side by changing the parallax according to the temperature difference. Therefore, the offset coefficient generation means 32 has substantially the same function as the coefficient change means 31 in the first embodiment, and can be said to be one mode of the coefficient change means.

The parallax image generation means 24 generates a parallax image based on the image P3, the image P4, and the offset table generated by the offset coefficient generation means 32.

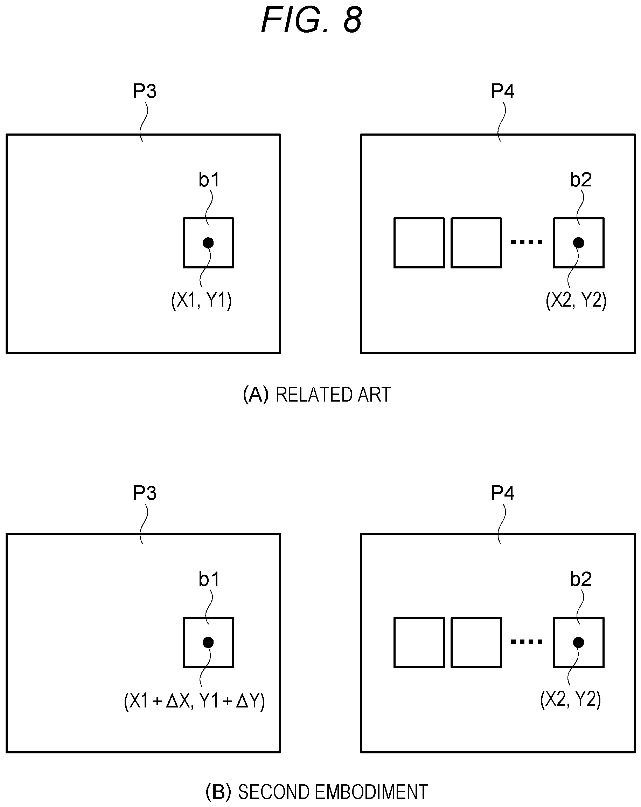

FIG. 8 is a schematic view illustrating an outline of parallax image generation processing according to the second embodiment. FIG. 8(A) illustrates parallax image generation processing according to the related art, and FIG. 8(B) illustrates the parallax image generation processing according to the present embodiment.

In the conventional parallax image generation processing of FIG. 8(A), the parallax image generation means 24 extracts a block b1 including a plurality of pixels in the image P3, and searches the image P4 for a block matching the block b1. At this time, a difference (displacement amount) (X2 - X1, Y2 - Y1) between a position (X1, Y1) of the block b1 in the image P3 and a position (X2, Y2) of a most closely matching block b2 in the image P4 is detected as parallax. Note that a position of a block in an image can be represented by, for example, a position of a pixel at the center of the block. Such processing is performed on all pixels in the image P3 to generate a parallax image.

Next, a specific example of the parallax image generation processing of FIG. 8(B) according to the second embodiment of the present invention will be described. In FIG. 8(B), first, an offset amount (ΔX, ΔY) generated by the offset coefficient generation means 32 is added to the position (X1, Y1) of the block b1 of the image P3. Since this offset amount is added only to the image P3, it can be said that the coefficient of the affine processing is substantially changed only for the image P3. Here, a position (X1 + ΔX, Y1 + ΔY) is referred to as an offset position.

Then, the block b1 including a plurality of pixels in the image P3 is extracted, and the image P4 is searched for a block matching the block b1 as in the case of FIG. 8(A). Then, a difference (displacement amount) (X2 - X1 - ΔX, Y2 - Y1 - ΔY) between the offset position (X1 + ΔX, Y1 + ΔY) of the block b1 in the image P3 and the position (X2, Y2) of the most closely matching block b2 in the image P4 is detected as parallax.

With such processing, the same effects as those of the first embodiment can be obtained. In the present embodiment, it is unnecessary to secure a volatile memory corresponding to an image size as in the first embodiment, and the required amount of memory can be further reduced. For example, when searching for a matching destination block for each block in the image P3, it is sufficient to hold only an offset amount of a reference position (for example, a center pixel) for each block of the image P3, and thus, it is unnecessary to prepare an offset table of an image size as in the first embodiment. Therefore, the amount of memory can be significantly reduced by using the image processing apparatus 110 according to the present embodiment. Furthermore, the amount of nonvolatile memory required for processing can also be reduced by calculating the displacement amount (ΔX, ΔY) from a linear or nonlinear function.

In the second embodiment, a specific process of generating the offset table by the offset coefficient generation means 32 can be arbitrarily designed. For example, a situation of a change in an image with respect to a temperature change may be measured for the camera 50 and the camera 60 in advance, and a content of the table may be determined for each temperature based on a difference in the change obtained from the result. Further, as in PTL 2, a difference between changes of the camera 50 and the camera 60 may be calculated using a predetermined function, and the content of the table may be determined. For example, a difference between changes of images with respect to the temperature may be represented by a function for the camera 50 and the camera 60, and a value of the function may be set as the displacement amount in each pixel of the image P3. In order to determine such a function, for example, distortion of an image may be actually measured under a plurality of temperature conditions, but the content of the table may be determined based on a design value related to the temperature or a measurement value of another lens and sensitivity information obtained from these values without performing such actual measurement.

Although the offset coefficient generation means 32 operates based on the temperature difference between cameras in the second embodiment, a criterion for the operation is not limited to the temperature difference. For example, as a modification, the operation may be performed based on a relative positional relationship between cameras.

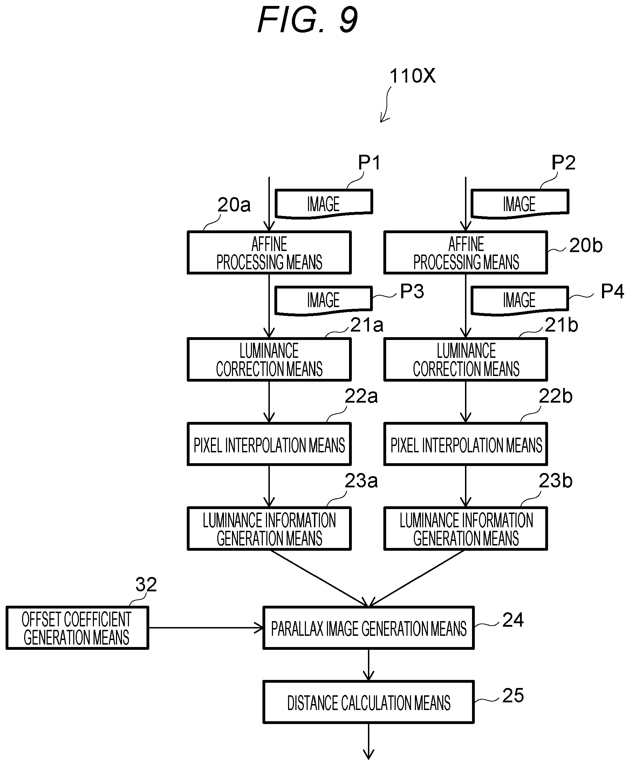

FIG. 9 is a block diagram illustrating an example of a configuration of an image processing apparatus 110X according to such a modification. In this case, the temperature difference acquisition means 30, the temperature sensor 53, and the temperature sensor 63 are unnecessary, and the offset coefficient generation means 32 can read and use offset information (for example, the offset coefficient) stored in the storage means 12. As a more specific example of such a modification, an in-vehicle image processing apparatus can be configured to reduce the influence of a windshield on an image.

### [Third Embodiment]

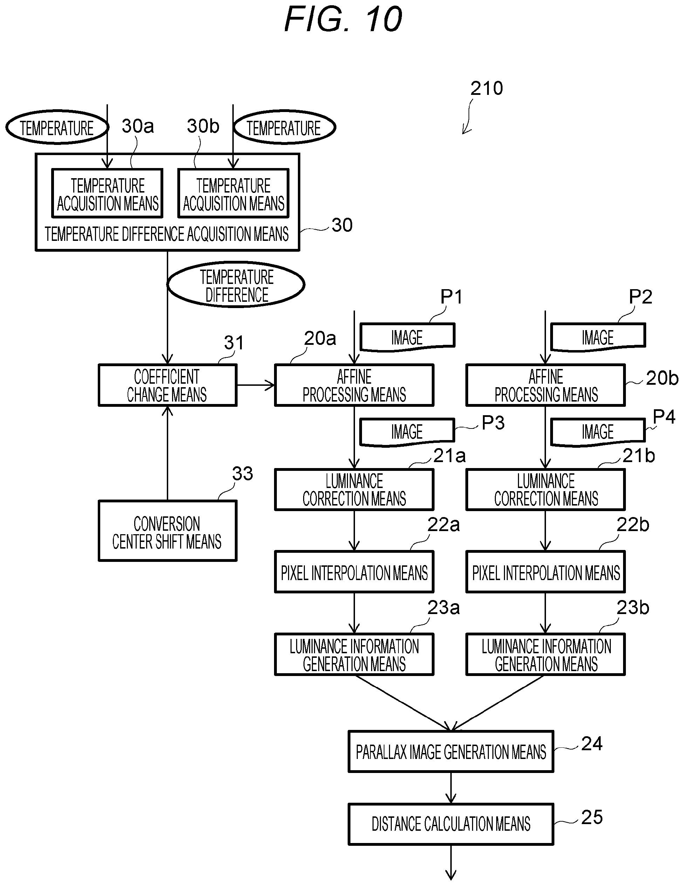

FIG. 10 is a block diagram illustrating an example of a configuration of an image processing apparatus 210 according to a third embodiment of the present invention. In the related art (for example, the techniques disclosed in PTL 1 and PTL 2), it is necessary to measure distortion of an image a plurality of times under a predetermined temperature condition in order to perform image conversion. However, measuring an image change with respect to the temperature requires a long measurement time, which is not a practical idea. Therefore, the image processing apparatus 210 according to the present embodiment converts an image based on a design value or a measurement value of another lens, and sensitivity information that can be determined in advance and obtained from these values.

Differences from the first embodiment will be described below. The image processing apparatus 210 includes a conversion center shift means 33 (position change means). The conversion center shift means 33 outputs a conversion reference table representing a function, which gives a distortion center position of the lens 51 according to a temperature difference between cameras, to the coefficient change means 31. This conversion reference table is stored in advance in the storage means 12, for example.

The coefficient change means 31 changes a distortion center position of the image P1 based on the temperature difference between cameras and the distortion center position acquired from the conversion reference table. Here, the "distortion center" is a position where a displacement amount of a position by conversion processing is the smallest, and is represented by, for example, a position in an image before conversion. That is, the coefficient change means 31 and the conversion center shift means 33 change a position of a coefficient of conversion processing with the position where the displacement amount in the image is the smallest before and after the conversion processing as the center. Then, conversion processing such as projective transformation is performed based on the changed distortion center position. This conversion processing includes, for example, affine processing. In this manner, it is possible to correct a relative positional deviation between lens 51 and image sensor 52 in a direction perpendicular to an optical axis (hereinafter, may be simply referred to as "relative positional deviation").

In general, a relationship between a lens and an image sensor is generally adjusted such that an image is formed at the infinity in front of the lens at the center of the image sensor, and is adjusted within a certain range, but there is a possibility that variations occur in a mass production process or the like. This is an example of a cause of the relative positional deviation.

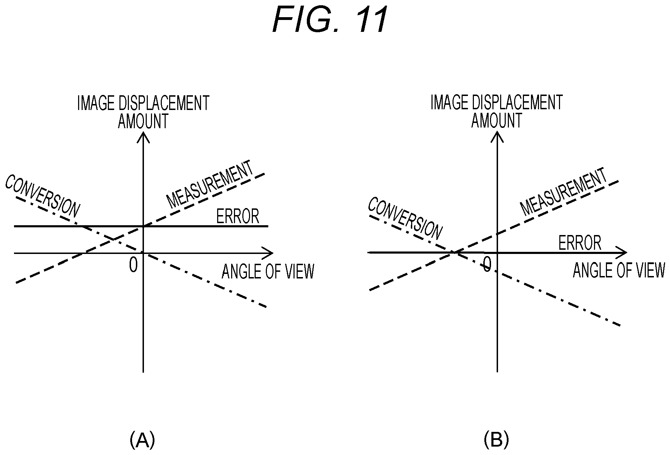

FIG. 11 illustrates correction of the relative positional deviation (that is, a change of the distortion center position) in an optical system on one side (for example, the lens 51 and the image sensor 52). Note that it is assumed that the lens temperature sensitivity changes linearly with respect to an angle of view and a temperature. FIG. 11(A) illustrates a case where the relative positional deviation included in measurement data is not corrected, and FIG. 11(B) illustrates a case where the relative positional deviation is corrected.

In both the cases, the amount of image displacement increases linearly with the angle of view in the actual measurement (broken line). That is, the amount of image displacement is close to zero in a region where the angle of view is close to zero, and the absolute value thereof increases in the peripheral portion. On the other hand, conversion for the amount of image displacement (one-dot chain line, for example, affine processing) is performed with a reverse characteristic (for example, a linear function in which the sign of a slope is reversed), and is designed to cancel a change in the amount of image displacement.

In the example of FIG. 11(A), a value of the amount of image displacement in measurement data at an image center (position where the angle of view becomes zero) is not zero, but the conversion is zero at the image center. Therefore, it can be seen that the relative positional deviation is not corrected, and an error (solid line) remains in the entire angle of view. On the other hand, in the example of FIG. 11(B), the amount of image displacement in measurement data is corrected such that the value at the image center becomes zero (note that the solid line indicating the error substantially coincides with the coordinate axis, and thus, does not appear clearly in FIG. 11(B)). When the relative positional deviation is corrected in this manner, it can be seen that no error remains at any angle of view. The correction of a measurement value as illustrated in FIG. 11(B) can be executed based on the conversion reference table output by the conversion center shift means 33.

A center position of distortion of a lens (corresponding to a value recorded in the conversion reference table) can be measured for a plurality of temperatures in advance in a manufacturing line. This manufacturing line may be a manufacturing line different from that in an assembly process of the image processing apparatus. Further, when projective transformation is performed, correction may be performed such that a center position (for example, a position where the displacement amount is minimized before and after the transformation) becomes the center. In this case, strictly speaking, the center of distortion of the lens due to the temperature is likely to deviate from a projection position, but does not greatly deviate from the projection position, and thus, the effect of the correction can be obtained at least to some extent.

Since such correction processing is performed, time-consuming measurement using the temperature as a parameter can be omitted, and the manufacturing time can be shortened. Note that a correction amount (the amount of change in the distortion center position) may be determined at the time of manufacturing and stored in the storage means 12. Further, the correction amount is not necessarily a value that depends only on the temperature difference, and may change according to a temporal change or the like.

In the above-described third embodiment, the conversion center shift means 33 changes the distortion center position (via the coefficient change means 31) only for the affine processing means 20a. As a modification, the conversion center shift means 33 may change the distortion center position only for the affine processing means 20b, or may change the distortion center position for both the affine processing means 20a and the affine processing means 20b. That is, the distortion center position may be changed for at least one of the affine processing means 20a and the affine processing means 20b.

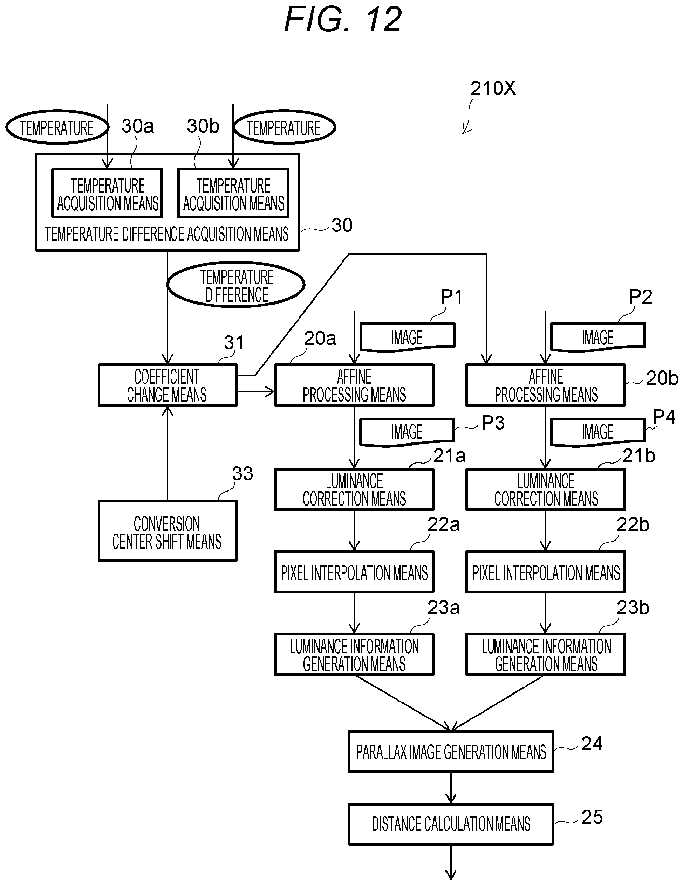

FIG. 12 is a block diagram illustrating an example of a configuration of an image processing apparatus 210X according to such a modification. In this modification, the conversion center shift means 33 changes the distortion center position for both the affine processing means 20a and the affine processing means 20b.

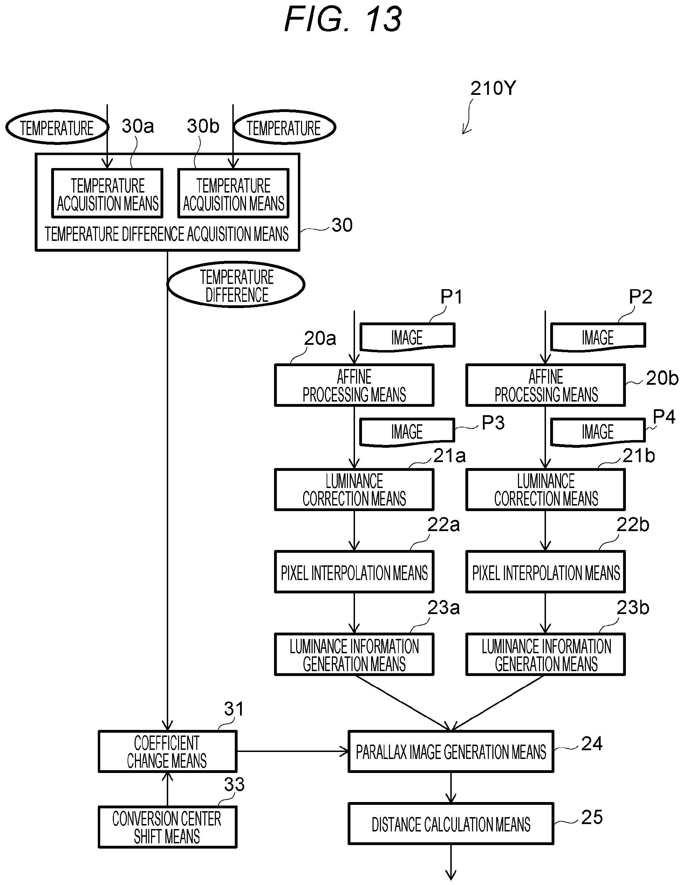

Further, in the third embodiment, the conversion center shift means 33 explicitly changes the affine coefficient for the coefficient change means 31 and the affine processing means 20a. As a modification, processing equivalent to indirectly changing the affine coefficient may be performed by the conversion center shift means 33 performing offset processing related to parallax via the coefficient change means 31 and the parallax image generation means 24 as in the second embodiment. FIG. 13 is a block diagram illustrating an example of a configuration of an image processing apparatus 210Y according to such a modification.

Further, the affine processing means 20a and the affine processing means 20b are used in the third embodiment, but any conversion processing means can be used without being limited to the affine processing means as long as conversion is performed by defining the distortion center. That is, it is sufficient for the image processing apparatus 210 to include a first conversion processing means for performing first conversion processing on the image P1 to acquire the image P3 and a second conversion processing means for performing second conversion processing on the image P2 to acquire the image P4.

### [Fourth Embodiment]

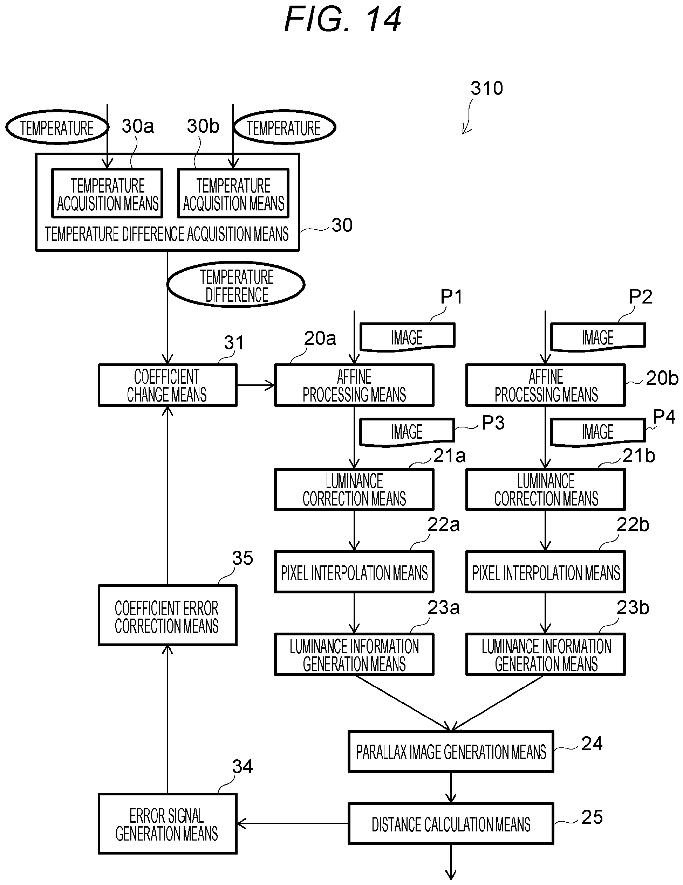

FIG. 14 is a block diagram illustrating an example of a configuration of an image processing apparatus 310 according to a fourth embodiment of the present invention. In addition to the configuration of the first embodiment, an error signal generation means 34 (error detection means) and a coefficient error correction means 35 (coefficient feedback means) are provided. Differences from the first embodiment will be described below.

In general, there is a change over time in an image processing apparatus, which may cause a distance measurement error in some cases, so that solving the distance measurement error becomes a problem. For example, it is assumed that a temporal change has influence such as a change in lens surface spacing, and the displacement amount with respect to the temperature of the lens changes. Therefore, a process of substantially correcting a conversion reference table is performed based on measurement (on a road, vehicle inspection, or the like) after manufacturing the image processing apparatus in the present embodiment.

When a temperature sensitivity of a lens changes, a distance measurement error similar to that illustrated in FIG. 3 occurs. Note that FIG. 3 illustrates a comparative example in which temperature sensitivities of right and left lenses are the same and a temperature difference occurs. However, even in a case where the temperature is constant and the temperature sensitivity changes for right and left lenses, the principle of occurrence of the distance measurement error is similarly applied.

The image processing apparatus 310 according to the fourth embodiment of the present invention feeds back the distance measurement error to the coefficient change means 31 to correct a change amount of a coefficient by the coefficient change means 31. In particular, the error signal generation means 34 detects a distance measurement error (distance detection error) of the distance calculation means 25, generates an error signal indicating the distance measurement error, and transmits the error signal to the coefficient error correction means 35.

The coefficient error correction means 35 corrects an error of the coefficient in the coefficient change means 31 based on the error signal indicating the distance detection error. That is, the coefficient of conversion processing is changed for the affine processing means 20a.

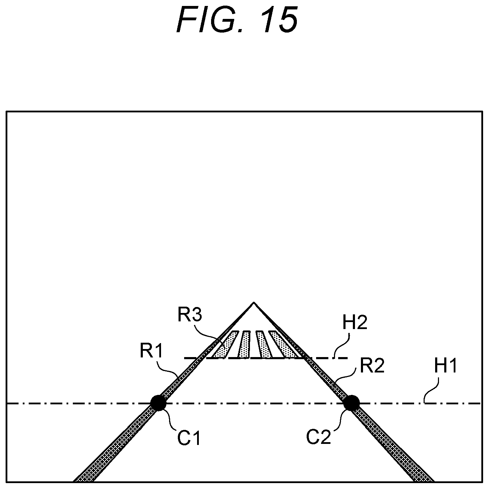

FIG. 15 illustrates an example of a method of detecting the distance measurement error by the error signal generation means 34 (the method of detecting the distance measurement error is not limited thereto and can be arbitrarily designed). In this example, pieces of position information of two points equidistant from a distance reference point on a horizontal straight line in an image are used.

In the image of FIG. 15, two white lines R1 and R2 appear on a road. It is assumed that the white lines R1 and R2 are equidistant from the distance reference point (for example, symmetrical with respect to a vehicle). The error signal generation means 34 generates a horizontal straight line H1 that intersects with both of the white lines R1 and R2. Next, the error signal generation means 34 obtains intersections C1 and C2 among the horizontal straight line H1 and the white lines R1 and R2. Next, the error signal generation means 34 acquires distances to the intersections C1 and C2, and calculates a difference between these distances. Here, the distance to the intersection C1 and the distance to the intersection C2 should be equal to each other (the difference becomes zero) when there is no distance measurement error. Based on such an idea, the coefficient error correction means 35 corrects the change amount of the coefficient in the coefficient change means 31 according to the difference between the distances when these distances are not equal. For example, a conversion reference table used by the coefficient change means 31 is rewritten. More specifically, the change amount of the coefficient is corrected, for example, by equally multiplying all values in the conversion reference table (that is, enlarging or reducing the image), so that the distance error of the image is corrected. The feedback processing is performed in this manner.

In this example, the horizontal straight line H1 is used as an example of the horizontal straight line. However, a straight line appearing in an image may be used as such a straight line, and an end line H2 of a crosswalk R3 may be used as the horizontal straight line, for example, when the crosswalk R3 can be detected.

Here, it is unnecessary to determine which of the image P3 and the image P4 is more correct (whose error is smaller) according to the fourth embodiment, and thus, the feedback processing can be realized with a relatively simple configuration. For example, in the related art (for example, the techniques disclosed in PTL 1 and PTL 2), it is necessary to determine which one of two lenses has changed in temperature sensitivity, but such processing is unnecessary in the fourth embodiment of the present invention.

The difference between distances to two points is used in the above-described fourth embodiment, but, instead of this, statistical processing may be used. For example, three or more points on the horizontal straight line H1 may be defined, and the change amount of the coefficient may be corrected based on statistical information (an average, a median, a variance, a standard deviation, or the like) of a distance to each point.

Further, the error signal may represent an error of another content. For example, a dimension (for example, a height from a road surface) of the same structure may be measured for each of the image P3 and the image P4, and a difference between the dimensions may be used as the error signal.

Furthermore, the coefficient change means 31 operates depending on the temperature difference between cameras in the fourth embodiment, but may operate without depending on the temperature difference. For example, a conversion reference table of the coefficient change means 31 may be set to a predetermined initial design value at the time of shipment, and then, the conversion reference table may be rewritten based on a result of an error signal on a road.

Further, the coefficient error correction means 35 explicitly changes the affine coefficient for the coefficient change means 31 and the affine processing means 20a in the fourth embodiment. As a modification, the coefficient error correction means 35 may perform offset processing related to parallax via the parallax image generation means 24 to perform processing equivalent to indirectly changing the affine coefficient as in the second embodiment.

Further, the coefficient error correction means 35 changes the coefficient of conversion processing only for the affine processing means 20a (via the coefficient change means 31) in the fourth embodiment, but the change of the coefficient of conversion processing may be performed for at least one of the affine processing means 20a and the affine processing means 20b.

Further, the affine processing means 20a and the affine processing means 20b are used in the fourth embodiment, but any conversion processing means can be used without being limited to the affine processing means. That is, it is sufficient for the image processing apparatus 310 to include the first conversion processing means for performing the first conversion processing on the image P1 to acquire the image P3 and the second conversion processing means for performing the second conversion processing on the image P2 to acquire the image P4.

In any of the above-described first to fourth embodiments, the relative positional relationship between the camera 50 and the camera 60 can be appropriately designed by those skilled in the art. For example, the camera 50 and the camera 60 can be arranged in a direction in which optical axes thereof are parallel to each other such that a straight line connecting the camera 50 and the camera 60 is orthogonal to the optical axes. In this case, the camera 50 and the camera 60 can be arrayed in the horizontal direction (that is, may be arranged in one horizontal plane), but may be arrayed in the vertical direction (that is, may be arranged in one vertical plane). Further, even when parallax is detected as one sensor by streamlining the camera 50 and the camera 60, the same effects as those of the first to fourth embodiments can be obtained by changing a coefficient of affine processing for an image on one side between two images for detecting the parallax or changing a distortion center position or feeding back a distance measurement error.

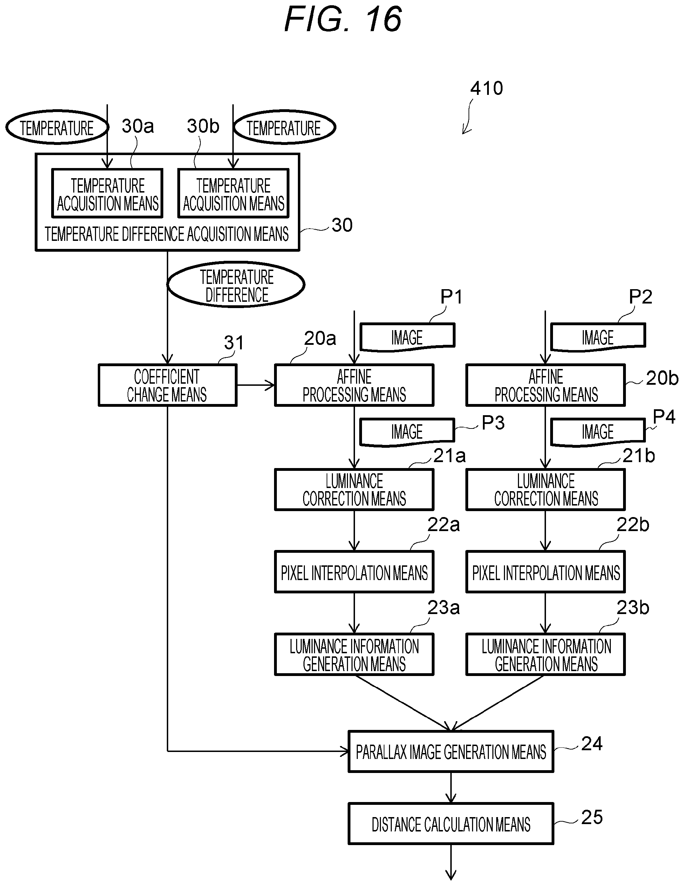

Note that the present invention is not limited to the above-described embodiments, but includes various modifications. The above-described embodiments have been described in detail in order to explain the present invention in an easy-to-understand manner, and are not necessarily limited to those having all the configurations described. Further, a part of the configuration of a certain embodiment can be replaced with the configuration of another embodiment, and a part of the configuration of another embodiment can be added to the configuration of a certain embodiment. Further, addition, deletion or substitution of some of other configurations can be made with respect to some configurations of each embodiment. For example, it is also possible to adopt a configuration in which the first embodiment and the second embodiment are combined as in an image processing apparatus 410 in FIG. 16. Furthermore, for example, when the image processing apparatus of each of the embodiments is combined with a new camera or is used together with another image processing apparatus, a process of correcting image distortion of another camera may be performed based on an image of one camera. In this manner, when a plurality of images are compared or combined, processing results can be matched, and a processing load can be reduced.

### Reference Signs List

- 10, 10X, 110, 110X, 210, 210X, 210Y, 310, 410: image processing apparatus
- 100: object
- 20a: affine processing means (first affine processing means, first conversion processing means)
- 20b: affine processing means (second affine processing means, second conversion processing means)
- 25: distance calculation means
- 30: temperature difference acquisition means

- 31: coefficient change means
- 32: offset coefficient generation means (coefficient change means)
- 53: temperature sensor (first temperature sensor)
- 63: temperature sensor (second temperature sensor)
- 33: conversion center shift means (position change means)
- 35: coefficient error correction means (coefficient feedback means)
- P1: image (first image)
- P2: image (second image)
- P3: image (third image)
- P4: image (fourth image)
All publications, patents and patent applications cited herein are hereby incorporated by reference in their entirety.

## Claims

1. An image processing apparatus comprising:
an image storage means for storing an image;
a first affine processing means for performing first affine processing on a first image to acquire a third image;
a second affine processing means for performing second affine processing on a second image to acquire a fourth image;
a coefficient change means for changing a coefficient of affine processing for only one of the first affine processing means and the second affine processing means; and
a distance calculation means for detecting a distance to an object in an image based on the third image and the fourth image.

2. The image processing apparatus according to claim 1, further comprising
a temperature difference acquisition means for acquiring a temperature difference between a first temperature related to a first camera that captures the first image and a second temperature related to a second camera that captures the second image,
wherein the coefficient change means changes a coefficient of affine processing based on the temperature difference.

3. The image processing apparatus according to claim 2, wherein
the temperature difference acquisition means includes a first temperature acquisition means for acquiring the first temperature and a second temperature acquisition means for acquiring the second temperature,
when a first difference between the first temperature and a predetermined reference temperature is larger than a second difference between the second temperature and the reference temperature, the coefficient change means changes a coefficient of affine processing for the first affine processing means, and
when the first difference is smaller than the second difference, the coefficient change means changes a coefficient of affine processing for the second affine processing means.

4. An image processing apparatus comprising:
an image storage means for storing an image;
a first conversion processing means for performing first conversion processing on a first image to acquire a third image;
a second conversion processing means for performing second conversion processing on a second image to acquire a fourth image;
a position change means for changing a position of a coefficient of conversion processing with a position where a displacement amount in an image before and after the conversion processing is minimized, for at least one of the first conversion processing means and the second conversion processing means; and
a distance calculation means for detecting a distance to an object in an image based on the third image and the fourth image.

5. An image processing apparatus comprising:
an image storage means for storing an image;
a first conversion processing means for performing first conversion processing on a first image to acquire a third image;
a second conversion processing means for performing second conversion processing on a second image to acquire a fourth image;
a distance calculation means for detecting a distance to an object in an image based on the third image and the fourth image;
an error detection means for detecting a detection error of the distance; and
a coefficient feedback means for changing a coefficient of conversion processing for at least one of the first conversion processing means and the second conversion processing means based on the detection error of the distance.
